# NEW EUROPEAN PATENT SPECIFICATION

(11) **EP 2 710 719 B2**
(45) Date of publication and mention of the opposition decision: **29.04.2020**
(45) Mention of the grant of the patent: 04.05.2016
(21) Application number: 12723312.0
(22) Date of filing: 09.05.2012
(51) Int. Cl.: H02M 3/07, H02M 1/00, H02K 49/10, H02K 5/128

(54) **MAGNETIC DRIVE COUPLING APPARATUS**
MAGNETISCHE ANTRIEBSKUPPLUNG
ÉQUIPEMENT D'ACCOUPLEMENT DE COMMANDE MAGNÉTIQUE

(30) Priority: 13.05.2011 US 201161485993 P
(43) Date of publication of application: 26.03.2014
(73) Proprietor: Carrier Corporation, Farmington, CT 06034 (US)
(72) Inventor: FLANIGAN, Paul J., Cicero, New York 13039 (US)
(74) Representative: Schmitt-Nilson Schraud Waibel Wohlfrom Patentanwälte Partnerschaft mbB
(86) International application number: PCT/US2012/036992
(87) International publication number: WO 2012/158410

(56) References cited:
- DE-A1- 4 118 788
- DE-A1- 4 212 982
- DE-A1-102005 057 771
- GB-A- 1 129 166
- GB-A- 2 145 882
- GB-A- 2 181 660
- GB-A- 2 216 189
- JP-A- S6 169 365
- JP-A- S60 125 456
- JP-A- S60 211 164
- US-A- 3 050 646
- US-A- 4 080 112
- US-A- 4 287 976
- US-A- 4 775 291

## Description

### BACKGROUND OF THE INVENTION

Aspects of the invention are directed to a magnetic drive coupling apparatus.

Reciprocating and other types of compressors often have an open drive configuration whereby a compressor is coupled to a motor or engine. In such cases, the crankshaft of the compressor has a mechanical face seal, which seals refrigerant and other fluids in the interior of the compressor but also allows for the coupling to the motor or engine. The face seal operates with a film of oil between a stationary stator and the rotor, which rotates with the crankshaft. Due to the nature of the seal, however, it has been observed that oil tends to leak and drip outside of the sealed compressor. This causes complaints in the field and leads to the need for rework of compressors.

GB 2 216 189 A shows a rotary pump comprises a pump unit having a pump impeller, and a motor unit having a motor for driving the pump. The motor unit drives a cup-shaped non-magnetic member having permanent magnets attached thereto. The magnets when driven by the motor, impart drive across a partition to magnets respective to the vanes of the pump impeller.

US 4 775 291 A shows a magnetic clutch drive for rotary pumps that is characterized by a motor driven outer magnetic clutch member juxtaposed to an imperforate wall of a pump housing. Within the interior of the housing a pump impeller shaft carries an inner magnetic clutch member juxtaposed to the wall opposite from the outer member.

GB 2 181 660 A shows a rotary magnetic-drive device having a high torque transmitting efficiency, causing little temperature elevation of treated fluids and exhibiting improved mechanical strength and thermal shock resistance has a chamber formed by combining a front casing with a rear casing to accommodate a rotor supporting a driven magnet.

GB 1 129 166 A shows a mixing or agitating apparatus having a drive shaft extending through a casing and a magnetic coupling comprising two rotor members separated by a can or shroud mounted above the casing where one of the rotor members is mounted from the drive shaft and supported in bearings within the can and is immersed in a cooling/lubricating medium which is separated from the liquid being pumped or mixed by a gaseous barrier.

JP S60 125456 A shows an outer rotor coupled to the output shaft of a liquid pump. An inner rotor is coupled to a drive shaft by a coupling key. The outer layer of the outer rotor and the inner layer of the inner layer are made of a material of relatively low magnetic permeability. The inner layer of the outer rotor and the intermediate layer of the inner rotor are made of a material of relatively high magnetic permeability.

JP S60 211164 A shows that each of magnetic torque transmitting members is installed in the tip of a rotor shaft of a vacuum pump and the inner side of a cylindrical member to be connected to an output shaft, and likewise a cylindrical vacuum seal member is installed in the tip of a driven shaft, passing through a space between these magnetic torque transmitting members.

JP S61 69365 A shows that a stationary shaft cylinder which also operates as a sealing function is welded to a vacuum flange, an inside yoke is press-fitted to the second rotor made of a nonmagnetic material, and driven magnets are secured. Further, an outside yoke is press-fitted to the inside of the first cylindrical rotor of nonmagnetic material, and drive magnets are secured to the inside. The shaft of a drive shaft is coupled with a drive source of a motor, and when the first rotor is rotated by the motor, the second rotor is rotated by the opposed magnet.

DE 41 18 788 A1 shows a pump aggregate which is medium-tight to atmosphere comprising a pump unit, a flange case and a split tube electromagnetic coupling in which the pump is connected to the housing of the motor by means of a flange case made as a pressure-tight housing. A lip seal is provided between the inner cavity of the flange and the inner cavity of the motor housing which prevents the ingress of the pump medium into the motor interior.

US 4 080 112 A shows a high-volume, heavy-duty, magnetically-coupled centrifugal pump having flow-dividing duct configurations directing the influx to opposite sides of the impeller as the result of assembly of mating body sections defining a multi-chambered pump body and including major partitioning web and cavity configurations with cooperative plate means affording certain inflow-chamber, shaft-support, and turbulence-suppressing chamber configurations operative to diminish turbulence volume and also block transfer of turbulence effects from the magnet rotor back to the impeller while permitting liquid to fill into the magnet chamber, the magnet rotor having web and passage configurations operative to force liquid and create pressure behind the rotor to create counterforces opposing certain thrust forces.

US 3 050 646 A shows a magnetic coupling comprising a stationary cylindrical stainless steel housing, an annular driving member surrounding said housing, a stainless steel shaft within said housing rotatably mounted coaxially therewith, a stainless steel driven member mounted on said shaft and a plurality of magnets equally spaced circumferentially on the inner surface of a driving member and an equal number of magnets equally spaced circumferentially on the outer surface of said driven member.

DE 10 2005 057 771 A1 shows a drive unit for a compressor, a compressor and a method of driving a compressor. The drive unit has a drive rotor that is provided with an electromagnet. The rotor is driven by a drive section of a motor vehicle in a mechanically coupled manner. An internal rotor is provided with a permanent magnet, where the internal rotor is mechanically coupled with a crankshaft of a compressor. The internal rotor is driven by the drive rotor using magnetic force. A separating hood is arranged between the drive rotor and the internal rotor. A drive pulley is mechanically coupled with the drive rotor for load transmission.

### BRIEF DESCRIPTION OF THE INVENTION

A magnetic drive coupling apparatus according to the invention is defined in independent claim 1.

A magnetic drive coupling apparatus is provided and includes a drive unit having a first rotatable shaft and an open drive assembly, a driven unit having an end face and a second rotatable shaft extending through the end face axially overlap, a magnetic drive coupling having first and second magnetically attractive parts associated with the first and second rotatable shafts, respectively, which transmits rotation between the first and second rotatable shafts and a sealing unit coupled to the end face to encompass the second magnetically attractive part and to hermetically seal oil and refrigerant in an interior of the driven unit.

A magnetic drive coupling apparatus is provided and includes a drive unit having a first rotatable shaft and an open drive assembly, a driven unit having an end face and a second rotatable shaft extending through the end face, a magnetic drive coupling having first and second magnetically attractive parts rotatably associated with the first and second rotatable shafts, respectively, which transmits rotation of the first rotatable shaft to the second rotatable shaft and a sealing unit coupled to the end face to encompass the second magnetically attractive part and to prevent leakage of fluid from the driven unit.

A magnetic drive coupling apparatus is provided and includes a drive unit having a first rotatable shaft, an outer drive coupling exposed to atmospheric conditions and rotatable with the first rotatable shaft and having a fan pulley, a driven unit having an end face and a second rotatable shaft extending through the end face, a magnetic drive coupling having first and second magnetically attractive parts rotatably associated with the first and second rotatable shafts, respectively, which transmits rotation of the first rotatable shaft to the second rotatable shaft and a sealing unit coupled to the end face to encompass the second magnetically attractive part and to prevent leakage of fluid from the driven unit.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is an enlarged side view of a compressor coupled to an engine; and
FIG. 2 is a cutaway side view of a magnetic drive coupling between the compressor and the engine.

### DETAILED DESCRIPTION OF THE INVENTION

Aspects of the invention eliminate the face seal of conventional configurations and instead employ a sealed magnetic drive coupling. The magnetic drive coupling has a hermetically sealed pressure barrier between a refrigerant side thereof and an atmospheric side thereof. Magnets are used to provide torque from an engine or other drive source (i.e., electric or hydraulic motors) to a compressor through the pressure barrier. A drive pulley may be combined with one half of the magnetic drive coupling. Elimination of the face seal creates a hermetically sealed open drive compressor that does not suffer from oil and/or refrigerant leaks and related repair costs.

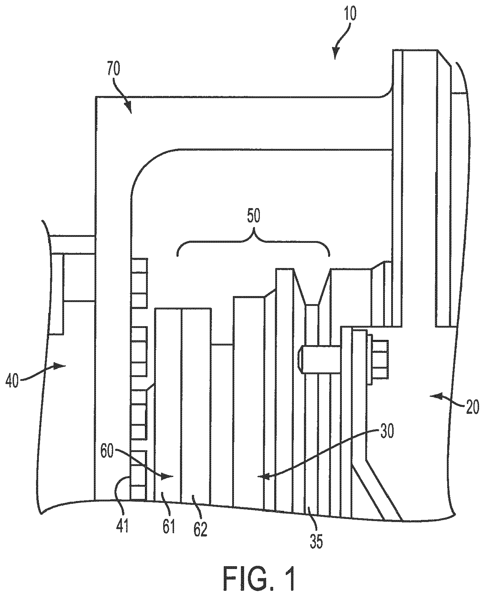

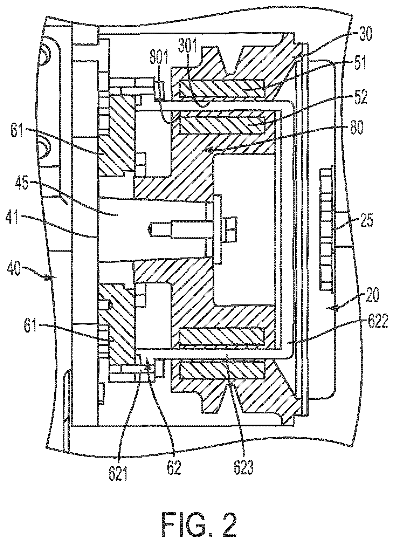

With reference to FIGS. 1 and 2, a magnetic drive coupling apparatus 10 is provided. The magnetic drive coupling apparatus 10 includes a drive unit 20, such as an engine or a motor, having a first rotatable shaft 25, an outer drive coupling 30 that is exposed to atmospheric conditions, is rotatable with the first rotatable shaft 25 and has a fan pulley 35, a driven unit 40, such as a compressor, having an end face 41 and a second rotatable shaft 45 extending axially through the end face 41, a magnetic drive coupling 50 and a sealing unit 60. The magnetic drive coupling 50 has first and second magnetically attractive parts 51 and 52, which are rotatably associated with the first and second rotatable shafts 25 and 45, respectively. The magnetic drive coupling 50 is thus configured to transmit rotation of the first rotatable shaft 25 to the second rotatable shaft 45 and vice versa in some cases. The sealing unit 60 is coupled to the end face 41 and configured to encompass at least the second magnetically attractive part 52 and to prevent leakage of fluid, such as oil and/or refrigerant, from an interior of the driven unit 40.

The magnetic drive coupling 10 may further include a partial housing 70, which is mounted to the drive unit 20 at a first side thereof and the driven unit 40 at a second side thereof. The housing 70 does not encompass the magnetic drive coupling 50 so that the outer drive coupling 30 is exposed to the atmospheric conditions and so that the fan pulley 35 can be connectable with a fan pulley assembly, such as a fan belt and a secondary drive shaft for, e.g., a fan. The housing 70 increases stability of a connection between the drive unit 20 and the driven unit 40.

As shown in FIG. 1, the end face 41 of the driven unit 40 has a given bolt pattern to which the sealing unit 60 is coupled. In particular, the sealing unit 60 includes an adapter plate 61 to mate with the given bolt pattern of the end face 41 in a new construction or a retrofit assembly process. Also, in a new construction, the adapter plate 61 may be incorporated in the design of the driven unit 40. The sealing unit 60 further includes a pressure barrier 62, which is coupled to the adapter plate 61 to form a hermetic seal encompassing at least the second magnetically attractive part 52. This hermetic seal thus exposes the second magnetically attractive part 52 to fluid, such as oil and/or refrigerant, but otherwise prevents leakage of fluid, such as oil and/or refrigerant, from an interior of the driven unit 40. As shown in FIG. 2, the pressure barrier 62 has an annular mating section 621 that mates with or is fastened to the adapter plate 61, a closed end 622 and an annular sidewall 623 extending axially between the mating section 621 and the closed end 622. The pressure barrier 62 may axially overlap with an end portion of the second rotatable shaft 45 and an end portion of the outer drive coupling 30.

The first and second magnetically attractive parts 51 and 52 may include permanent magnets that are arranged to be attractive to one another and are housed or otherwise contained within the outer drive coupling 30 and an inner drive coupling 80, which is operably coupled to the end potion of the second rotatable shaft 45 such that rotation of the inner drive coupling 80 causes the second rotatable shaft 45 to rotate as well.

The outer drive coupling 30 has a radially outward facing surface along which the fan pulley 25 is defined as a groove in which a fan belt or chain can sit. The groove can be smooth or toothed. The outer drive coupling 30 also has a radially inward facing surface 301 that is disposable proximate to a radially outward facing surface of the pressure barrier 62. The first magnetically attractive part 51 is disposed to extend axially along the radially inward facing surface 301 of the outer drive coupling 30. Similarly, the inner drive coupling 80 may be formed as an integral body with a radially inner part operably coupled to the second rotatable shaft 45 and a radially outer part 801 disposable proximate to a radially inward facing surface of the pressure barrier 62. The second magnetically attractive part 52 is disposed to extend axially along this radially outer part of the inner drive coupling 80.

The first magnetically attractive part 51 may be disposed radially about the second magnetically attractive part 52 while the first and second magnetically attractive parts 51 and 52 may be arrayed circumferentially about the second rotatable shaft 45 or in any known configuration. In any case, rotation of the first rotatable shaft 25 causes rotation of the outer drive coupling 30 and, in turn, causes rotation of the first magnetically attractive part 51. This rotation and the attraction between the first and second magnetically attractive parts 51 and 52 thus causes the second magnetically attractive part 52, the inner drive coupling 80 and the second rotatable shaft 45 to rotate as well.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A magnetic drive coupling apparatus (10), comprising:
a drive unit (20) having a first rotatable shaft (25) and an open drive assembly;
a driven unit (40) having an end face (41) and a second rotatable shaft (45) extending through the end face (41) axially overlap;
a magnetic drive coupling (50) having first and second magnetically attractive parts (51, 52) associated with the first and second rotatable shafts (25, 45), respectively, which transmits rotation between the first and second rotatable shafts (25, 45); and
a sealing unit (60) coupled to the end face (41) to encompass the second magnetically attractive part (52) and to hermetically seal oil and refrigerant in the driven unit (40);
wherein the open drive assembly comprises an outer drive coupling (30) exposed to atmospheric conditions and rotatable with the first rotatable shaft (25);
wherein the outer drive coupling (30) comprises a fan pulley (35) configured to be connected with a fan pulley assembly, such as a fan belt and a secondary drive shaft for a fan; and
wherein the driven unit (40) comprises a compressor;
**characterized in that**
the first rotatable shaft (25) is configured to cause rotation of the outer drive coupling (30), and to cause, in turn, rotation of the first magnetically attractive part (51).

2. The magnetic drive coupling apparatus (10) according to claim 1, wherein the drive unit (20) comprises one of an engine or a motor.

3. The magnetic drive coupling apparatus (10) according to claim 1, wherein the first and second magnetically attractive parts (51, 52) comprise permanent magnets.

4. The magnetic drive coupling apparatus (10) according to claim 1, wherein the first and second magnetically attractive parts (51, 52) are arrayed circumferentially about the second rotatable shaft (45).

5. The magnetic drive coupling apparatus (10) according to claim 1, wherein the first magnetically attractive part (51) is disposed radially outwardly of the second magnetically attractive part (52).

6. The magnetic drive coupling apparatus (10) according to claim 1, wherein the sealing unit (60) comprises:
an adapter plate (61) to mate with the end face (41); and
a pressure barrier (62) coupled to the adapter plate (61) to form a hermetic seal encompassing the second magnetically attractive part (52).

7. The magnetic drive coupling apparatus (10) according to claim 4, wherein the fluid comprises one of oil and refrigerant.

## Patentansprüche

1. Magnetische Antriebskupplungsvorrichtung (10), umfassend:
eine Antriebseinheit (20) mit einer ersten drehbaren Welle (25) und einer offenen Antriebsanordnung;
eine angetriebene Einheit (40) mit einer Endfläche (41) und einer zweiten drehbaren Welle (45), die sich axial überstehend durch die Endfläche (41) erstreckt;
eine magnetische Antriebskupplung (50), die magnetisch anziehende erste und zweite Teile (51, 52) aufweist, die jeweils der ersten und zweiten drehbaren Welle (25, 45) zugeordnet sind, die Drehung zwischen der ersten und zweiten drehbaren Welle (25, 45) überträgt; und
eine Dichtungseinheit (60), die an die Endfläche (41) gekoppelt ist, um das zweite magnetisch anziehende Teil (52) zu umschließen und Öl und Kältemittel in der angetriebenen Einheit (40) hermetisch abzudichten;
wobei die offene Antriebsbaugruppe eine äußere Antriebskupplung (30) umfasst, die Atmosphärenbedingungen ausgesetzt und mit der ersten drehbaren Welle (25) drehbar ist;
wobei die äußere Antriebskupplung (30) eine Ventilatorscheibe (35) umfasst, die dazu konfiguriert ist, mit einer Ventilatorscheibenanordnung wie etwa einem Ventilatorriemen und einer sekundären Antriebswelle für einen Ventilator verbunden zu sein; und
wobei die Antriebseinheit (40) einen Verdichter umfasst; **dadurch gekennzeichnet, dass**
die erste drehbare Welle (25) dazu konfiguriert ist, eine Drehung der äußeren Antriebskupplung (30) zu bewirken und wiederum eine Drehung des ersten magnetisch anziehenden Teils (51) zu bewirken.

2. Magnetische Antriebskupplungsvorrichtung (10) nach Anspruch 1, wobei die Antriebseinheit (20) einen von einem Verbrennungsmotor oder einem elektrischen Motor umfasst.

3. Magnetische Antriebskupplungsvorrichtung (10) nach Anspruch 1, wobei das erste und zweite magnetisch anziehende Teil (51, 52) Dauermagnete umfassen.

4. Magnetische Antriebskupplungsvorrichtung (10) nach Anspruch 1, wobei das erste und zweite magnetisch anziehende Teil (51, 52) in Umfangsrichtung um die zweite drehbare Welle (45) angeordnet sind.

5. Magnetische Antriebskupplungsvorrichtung (10) nach Anspruch 1, wobei das erste magnetisch anziehende Teil (51) radial außerhalb des zweiten magnetisch anziehenden Teils (52) angeordnet ist.

6. Magnetische Antriebskupplungsvorrichtung (10) nach Anspruch 1, wobei die Dichtungseinheit (60) Folgendes umfasst:
eine Adapterplatte (61) zum Verbinden mit der Endfläche (41); und
eine Druckbarriere (62), die an die Adapterplatte (61) gekoppelt ist, um eine hermetische Abdichtung zu bilden, die das zweite magnetisch anziehende Teil (52) einschließt.

7. Magnetische Antriebskupplungsvorrichtung (10) nach Anspruch 4, wobei das Fluid eines von Öl und Kältemittel umfasst.

## Revendications

1. Appareil d'accouplement à entraînement magnétique (10), comprenant :
une unité d'entraînement (20) ayant un premier arbre rotatif (25) et un mécanisme d'entraînement ouvert ;
une unité entraînée (40) ayant une face d'extrémité (41) et un second arbre rotatif (45) s'étendant à travers la face d'extrémité (41) se chevauchant axialement ;
un accouplement à entraînement magnétique (50) ayant des première et seconde parties attractives magnétiquement (51, 52) associées aux premier et second arbres rotatifs (25, 45), respectivement, qui transmet une rotation entre les premier et second arbres rotatifs (25, 45) ; et
une unité d'étanchéité (60) couplée à la face d'extrémité (41) pour englober la seconde partie attractive magnétiquement (52) et pour sceller hermétiquement l'huile et le réfrigérant dans l'unité entraînée (40) ;
dans lequel le mécanisme d'entraînement ouvert comprend un accouplement d'entraînement extérieur (30) exposé aux conditions atmosphériques et rotatif avec le premier arbre rotatif (25) ;
dans lequel l'accouplement d'entraînement extérieur (30) comprend une poulie de ventilateur (35) configurée pour être connectée à un mécanisme de poulie de ventilateur, comme une courroie de ventilateur et un arbre d'entraînement secondaire pour un ventilateur ; et
dans lequel l'unité entraînée (40) comprend un compresseur ;
**caractérisé en ce que**
le premier arbre rotatif (25) est configuré pour entraîner la rotation de l'accouplement d'entraînement extérieur (30), et pour entraîner, à son tour, la rotation de la première partie attractive magnétiquement (51).

2. Appareil d'accouplement à entraînement magnétique (10) selon la revendication 1, dans lequel l'unité d'entraînement (20) comprend un d'un propulseur ou d'un moteur.

3. Appareil d'accouplement à entraînement magnétique (10) selon la revendication 1, dans lequel les première et seconde parties attractives magnétiquement (51, 52) comprennent des aimants permanents.

4. Appareil d'accouplement à entraînement magnétique (10) selon la revendication 1, dans lequel les première et secondes parties attractives magnétiquement (51, 52) sont agencées de manière circonférentielle sur le second arbre rotatif (45).

5. Appareil d'accouplement à entraînement magnétique (10) selon la revendication 1, dans lequel la première partie attractive magnétiquement (51) est disposée radialement vers l'extérieur de la seconde partie attractive magnétiquement (52).

6. Appareil d'accouplement à entraînement magnétique (10) selon la revendication 1, dans lequel l'unité d'étanchéité (60) comprend :
une plaque d'adaptateur (61) pour correspondre à la face d'extrémité (41) ; et
une barrière de pression (62) couplée à la plaque d'adaptateur (61) pour former un joint hermétique englobant la seconde partie attractive magnétique (52).

7. Appareil d'accouplement à entraînement magnétique (10) selon la revendication 4, dans lequel le fluide comprend un d'une huile et d'un réfrigérant.
